# EUROPEAN PATENT SPECIFICATION

(11) **EP 4 059 742 B1**
(45) Date of publication and mention of the grant of the patent: **09.08.2023**
(21) Application number: 22156857.9
(22) Date of filing: 15.02.2022
(51) Int. Cl.: B60C 15/06

(54) **PNEUMATIC TIRE FOR RACING KART**
LUFTREIFEN FÜR RENN-KARTS
PNEUMATIQUE POUR KART DE COURSE

(30) Priority: 16.03.2021 JP 2021042175
(43) Date of publication of application: 21.09.2022
(73) Proprietor: Sumitomo Rubber Industries, Ltd., Kobe-shi, Hyogo-ken 651-0072 (JP)
(72) Inventor: OKOSE, Motomu, Kobe-shi, 651-0072 (JP)
(74) Representative: Manitz Finsterwald Patent- und Rechtsanwaltspartnerschaft mbB

(56) References cited:
- WO-A1-2016/005084
- WO-A1-2020/122251
- WO-A1-2020/122252
- JP-A- 2017 137 008

## Description

### BACKGROUND OF THE INVENTION

### Field of the Invention

The present invention relates to a pneumatic tire to be mounted to a racing kart.

### Background Art

In a kart race, racing karts run on a circuit course. The kart race plays a role in, for example, publicizing motor sports and training drivers. To a tire mounted to a racing kart, a so-called bias structure is adopted.

In recent years, in racing karts, performances of engines and chassis have been significantly enhanced. Tires for racing karts are also required to exhibit enhanced performances. Japanese Laid-Open Patent Publication No. 2017-137008 discloses a tire, for a kart, having fillers. The filler is disposed inward of a sidewall. The filler includes a plurality of cords.

The fillers disclosed in Japanese Laid-Open Patent Publication No. 2017-137008 contribute to longitudinal stiffness of the tire. The tire having high longitudinal stiffness exhibits excellent traction performance and braking performance. The tire having the fillers also has high vertical stiffness. The high vertical stiffness may reduce steering stability performance of the tire.
WO 2020/122252 A1 discloses a pneumatic tire comprising the features according to the preamble of claim 1.

An object of the present invention is to provide a pneumatic tire, for a racing kart, exhibiting traction performance, braking performance, and steering stability in an excellently balanced manner.

### SUMMARY OF THE INVENTION

This object is satisfied by a pneumatic tire comprising the features according to claim 1.
The pneumatic tire is provided for a racing kart and includes: a tread; a pair of sidewalls; a pair of beads; a carcass; and a pair of reinforcing layers. The sidewalls extend almost inwardly from ends, respectively, of the tread in a radial direction. The beads are disposed inward of the sidewalls, respectively, in an axial direction. The carcass extends along inner sides of the tread and the sidewalls, is extended on and between one of the beads and another of the beads, and has a bias structure. The reinforcing layers are disposed inward of the sidewalls, respectively, in the axial direction. A width of each reinforcing layer is not greater than 25 mm. Each reinforcing layer includes a plurality of cords. An absolute value of an angle of each cord relative to a circumferential direction is not less than 0° and not greater than 15°.

Furthermore, a height Hi of an inner end of each reinforcing layer in the radial direction is not less than 20 mm. Preferably, a height Ho of an outer end of each reinforcing layer in the radial direction is not greater than 50 mm.

Each bead may include a core, and an apex extending outwardly from the core in the radial direction. Preferably, the height Hi of the inner end of each reinforcing layer is less than a height Ha of an outer end of the apex. Preferably, the height Ho of the outer end of each reinforcing layer is greater than the height Ha of the outer end of the apex. Preferably, a ratio ((Ha-Hi)/Ht) of a difference (Ha-Hi) between the height Ha and the height Hi, to a height Ht of the tire, is not less than 0.05 and not greater than 0.30. Preferably, a ratio ((Ho-Ha)/Ht) of a difference (Ho-Ha) between the height Ho and the height Ha, to the height Ht of the tire, is not less than 0.05 and not greater than 0.30.

The carcass may include a first ply and a second ply. The first ply may include a plurality of cords each of which is inclined relative to the circumferential direction in a negative direction, and topping. The second ply may include a plurality of cords each of which is inclined relative to the circumferential direction in a positive direction, and topping. An angle of each of the cords of the reinforcing layers relative to the circumferential direction indicates zero or a positive value. Preferably, an absolute value of an angle of each of the cords of the reinforcing layers relative to each cord of the second ply is not less than 10° and not greater than 40°.

The first ply may include a plurality of cords each of which is inclined relative to the circumferential direction in a positive direction, and topping. The second ply may include a plurality of cords each of which is inclined relative to the circumferential direction in a negative direction, and topping. An angle of each of the cords of the reinforcing layers relative to the circumferential direction indicates zero or a positive value. Preferably, an absolute value of an angle of each of the cords of the reinforcing layers relative to each cord of the first ply is not less than 10° and not greater than 40°.

The pneumatic tire, for a racing kart, according to the present invention has high longitudinal stiffness and does not have excessively high vertical stiffness. The tire exhibits traction performance, braking performance, and steering stability in an excellently balanced manner.

### BRIEF DESCRIPTION OF THE DRAWINGS

FIG. 1 is a cross-sectional view of a part of a pneumatic tire, for a racing kart, according to one embodiment of the present invention;
FIG. 2 is an enlarged view of a part of the tire shown in FIG. 1;
FIG. 3 is a partially cutaway cross-sectional view of the tire shown in FIG. 1;
FIG. 4 is a cross-sectional view of a part of the tire shown in FIG. 1;
FIG. 5 is an exploded perspective view of the tire shown in FIG. 4;
FIG. 6 is a cross-sectional view of a rubber sheet for a reinforcing layer of the tire shown in FIG. 1;
FIG. 7 is a partially cutaway cross-sectional view of a pneumatic tire, for a racing kart, according to another embodiment of the present invention; and
FIG. 8 is an exploded perspective view of the tire shown in FIG. 7.

### DETAILED DESCRIPTION

The following will describe in detail the present invention based on preferred embodiments with appropriate reference to the accompanying drawings.

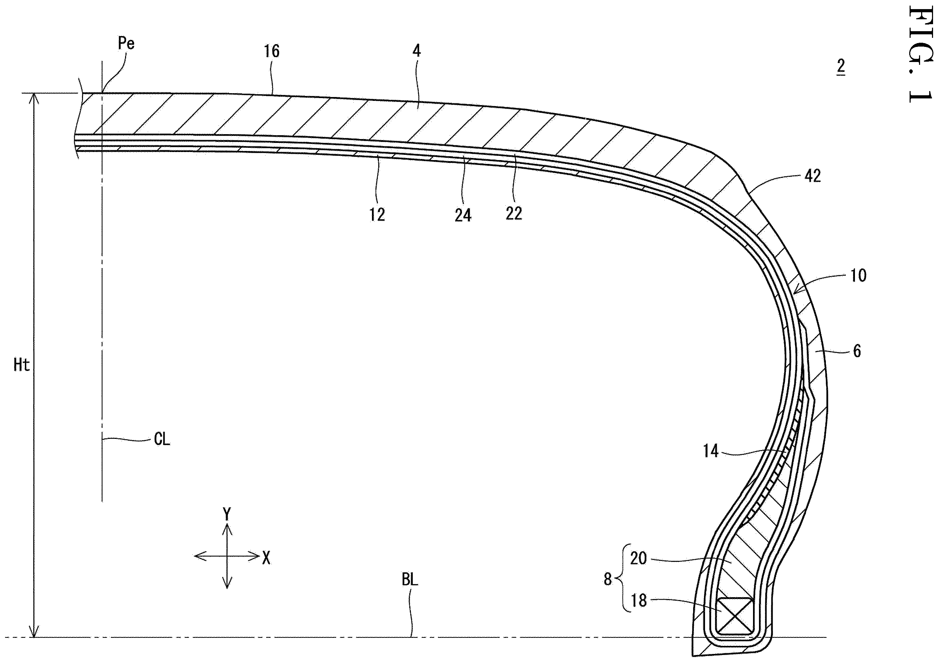

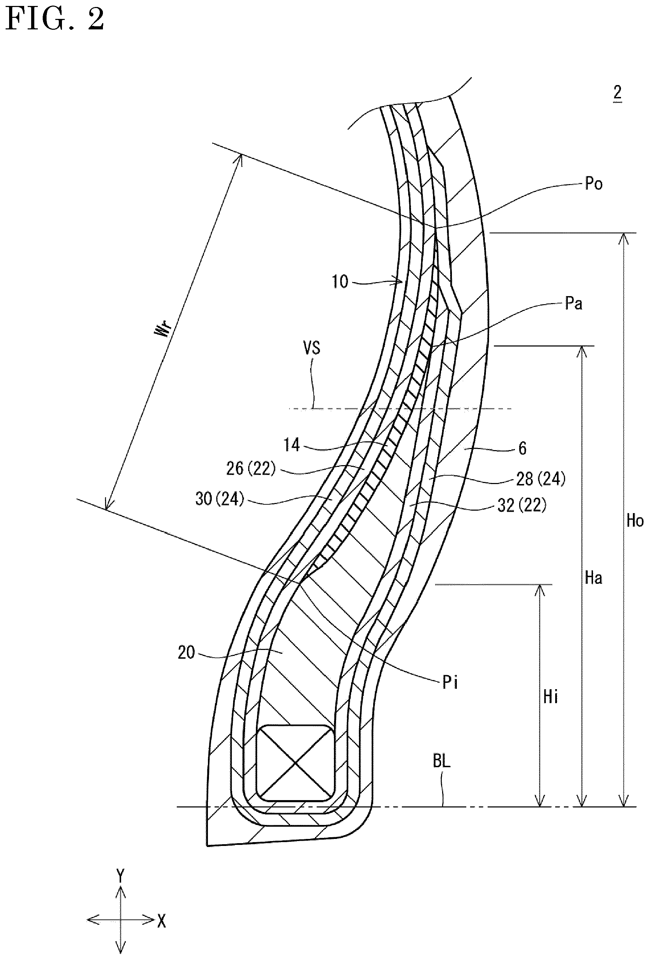

FIGS. 1 and 2 show a pneumatic tire 2. In FIGS. 1 and 2, an arrow X represents an axial direction of the tire 2, and an arrow Y represents a radial direction of the tire 2. In

FIGS. 1 and 2, the direction perpendicular to the surface of the drawing sheet represents a circumferential direction of the tire 2. In FIG. 1, an alternate long and short dash line CL represents an equator plane of the tire 2. In FIG. 1, an imaginary line BL represents a base line. The base line BL represents a line that defines a diameter (see JATMA) of a normal rim on which the tire 2 is mounted. The base line BL extends in the axial direction.

The tire 2 includes a tread 4, a pair of sidewalls 6, a pair of beads 8, a carcass 10, an inner liner 12, and a pair of reinforcing layers 14. The tire 2 is of a tubeless type. The tire 2 is mounted to a racing kart.

The tread 4 has a shape projecting outwardly in the radial direction. The tread 4 forms a tread surface 16 that comes into contact with a road surface. The tread 4 has no grooves. The tire 2 is of a slick type. The tread 4 may have grooves. The tread 4 is formed of crosslinked rubber having excellent wear resistance and grip performance. In FIG. 1, a double-headed arrow Ht represents a height of the tire 2. The height Ht represents a height from the base line BL to an intersection point Pe of the tread surface 16 and the equator plane CL.

The sidewalls 6 extend almost inwardly from ends, respectively, of the tread 4 in the radial direction. The sidewall 6 is formed of crosslinked rubber having excellent cut resistance and weather resistance. The sidewalls 6 prevent damage to the carcass 10. The sidewall 6 may partially include a clinch. The clinch is formed of crosslinked rubber having a high hardness.

The beads 8 are disposed inward of the sidewalls 6, respectively, in the axial direction. Each bead 8 has a core 18 and an apex 20. The core 18 is ring-shaped. The core 18 includes a wound non-stretchable wire. A typical material of the wire is steel. The apex 20 extends outwardly from the core 18 in the radial direction. The apex 20 is tapered outwardly in the radial direction. In FIG. 2, reference character Pa represents an outer end of the apex 20 in the radial direction.

The carcass 10 has a first ply 22 and a second ply 24. In the carcass 10, the number of the plies is two. The number of the plies may be one. The carcass 10 may have three or more plies.

In the tire 2, the second ply 24 and the first ply 22 are stacked on each other. The first ply 22 and the second ply 24 are extended on and between the beads 8 on both sides. The first ply 22 and the second ply 24 extend along the inner sides of the tread 4 and the sidewalls 6.

The first ply 22 is extended on and between the beads 8 on both the sides. The first ply 22 is turned up around each core 18. By the first ply 22 being turned up, as shown in FIG. 2, the first ply 22 has a first main portion 26 and a pair of first turned-up portions 32.

The second ply 24 is extended on and between the beads 8 on both the sides. The second ply 24 is turned up around each core 18. By the second ply 24 being turned up, as shown in FIG. 2, the second ply 24 has a second main portion 30 and a pair of second turned-up portions 28.

Each of the first ply 22 and the second ply 24 includes a plurality of cords aligned with each other, and topping rubber, which is not shown. Each cord is inclined relative to the equator plane CL. An absolute value of the inclination angle is preferably not less than 25° and not greater than 40°. A direction in which the cord of the first ply 22 is inclined relative to the equator plane CL is opposite to a direction in which the cord of the second ply 24 is inclined relative to the equator plane CL. The carcass 10 of the tire 2 has a so-called bias structure.

The cord of the carcass 10 is preferably a strand of an organic fiber. Preferable examples of the organic fiber include polyester fibers, nylon fibers, rayon fibers, polyethylene naphthalate fibers, and aramid fibers.

The inner liner 12 is disposed inward of the carcass 10. The inner liner 12 is joined to the inner surface of the carcass 10. The inner liner 12 is formed of crosslinked rubber having excellent airtightness. The typical base rubber of the inner liner 12 is isobutylene-isoprene-rubber or halogenated isobutylene-isoprene-rubber. The inner liner 12 maintains an internal pressure of the tire 2.

The reinforcing layers 14 are disposed inward of the sidewalls 6, respectively, in the axial direction. As is apparent from FIG. 2, in the present embodiment, the reinforcing layer 14 is disposed between the apex 20 and the second main portion 30. In other words, the reinforcing layer 14 is disposed inward of the apex 20 in the axial direction. The reinforcing layer 14 may be disposed inward of the first main portion 26. The reinforcing layer 14 may be disposed between the first main portion 26 and the second main portion 30. The reinforcing layer 14 may be disposed between the apex 20 and the second turned-up portion 28. The reinforcing layer 14 may be disposed between the second turned-up portion 28 and the first turned-up portion 32. The reinforcing layer 14 may be disposed between the first turned-up portion 32 and the sidewall 6.

In FIG. 2, reference character Pi represents an inner end of the reinforcing layer 14 in the radial direction, and reference character Po represents an outer end of the reinforcing layer 14 in the radial direction. In FIG. 2, reference character VS represents an imaginary plane. The imaginary plane represents a curved plane at which a distance to the inner end Pi in the radial direction is equal to a distance to the outer end Po in the radial direction.

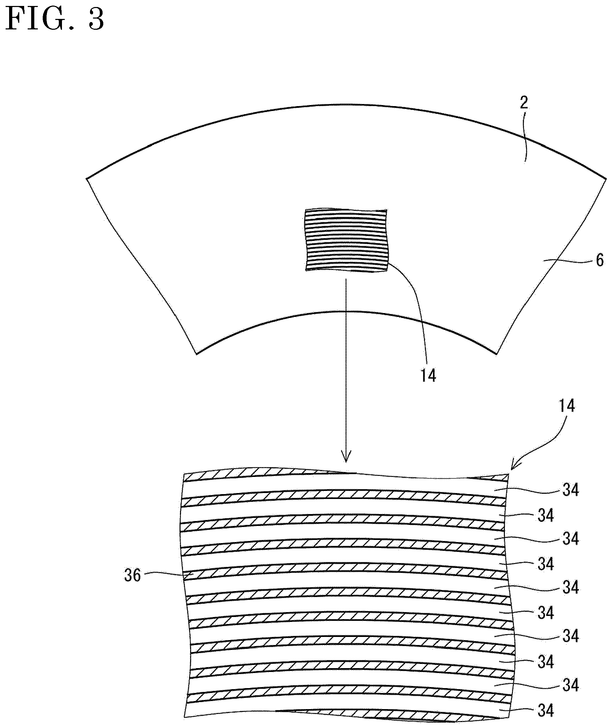

FIG. 3 is a partially cutaway cross-sectional view of the tire 2 shown in FIG. 1. In FIG. 3, by the tire 2 being cut, the reinforcing layer 14 exposed from the sidewall 6 is shown. The reinforcing layer 14 includes a plurality of cords 34 and topping rubber 36. The cords 34 are concentrically disposed. Each cord 34 extends along the circumferential direction.

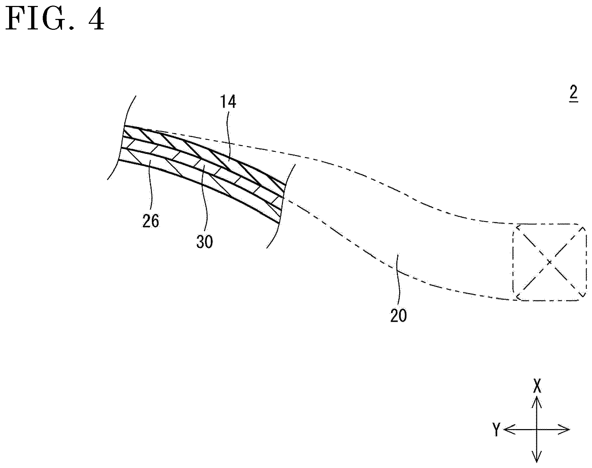

FIG. 4 is a cross-sectional view of a part of the tire 2 shown in FIG. 1. FIG. 4 shows the first main portion 26, the second main portion 30, and the reinforcing layer 14. The second main portion 30 is stacked on the first main portion 26. The reinforcing layer 14 is stacked on the second main portion 30.

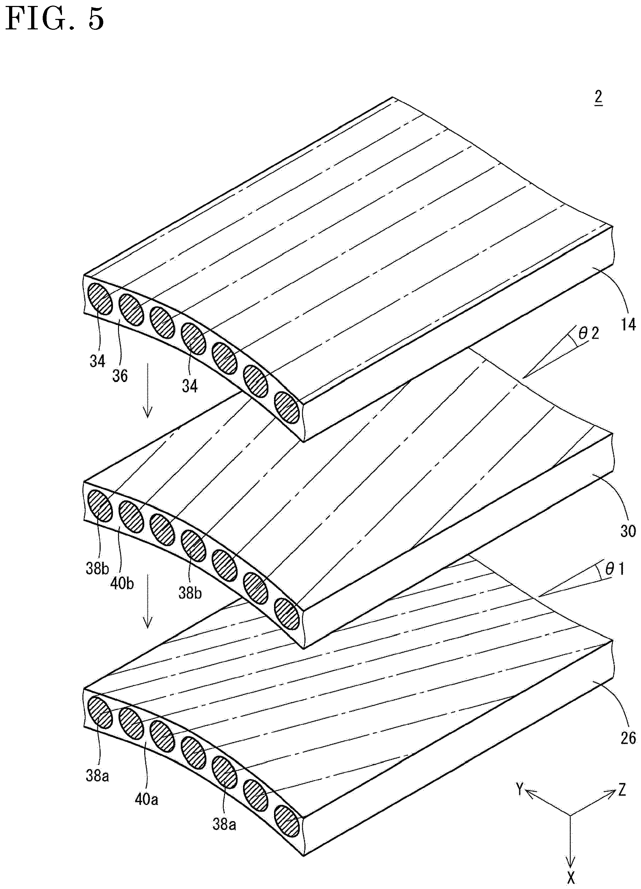

FIG. 5 is an exploded perspective view of the tire 2 shown in FIG. 4. FIG. 5 shows the first main portion 26, the second main portion 30, and the reinforcing layer 14. As is apparent from FIG. 5 when FIG. 4 is also referred to, in FIG. 5, an arrow X represents the axial direction of the tire 2, an arrow Y represents the radial direction of the tire 2, and an arrow Z represents the circumferential direction of the tire 2.

As described above, the first main portion 26 includes a plurality of cords 38a and topping rubber 40a. Each cord 38a is inclined relative to the circumferential direction. In the present embodiment, the cord 38a of the first main portion 26 is inclined relative to the circumferential direction in a negative direction. In FIG. 5, reference character θ1 represents an angle of the direction of the cord 38a relative to the circumferential direction. The angle θ1 is measured on the imaginary plane VS (see FIG. 2).

As described above, the second main portion 30 includes a plurality of cords 38b and topping rubber 40b. Each cord 38b is inclined relative to the circumferential direction. In the present embodiment, the cord 38b of the second main portion 30 is inclined relative to the circumferential direction in a positive direction. In FIG. 5, reference character θ2 represents an angle of the direction of the cord 38b relative to the circumferential direction. The angle θ2 is measured on the imaginary plane VS (see FIG. 2). In the present embodiment, the absolute value of the angle θ2 is equal to the absolute value of the angle θ1.

As described above, the reinforcing layer 14 includes the plurality of cords 34 and the topping rubber 36. Each cord 34 extends in the circumferential direction. An angle of the direction of the cord 34 relative to the circumferential direction is zero. The angle is measured on the imaginary plane VS (see FIG. 2).

When a racing kart is accelerated or decelerated, a shearing stress in the rotation direction occurs in the tire 2. The cords 34 of the reinforcing layer 14 are oriented in the circumferential direction. Therefore, a tensile force of the cord 34 reduces shear deformation of the tire 2. In the tire 2, the reinforcing layer 14 contributes to longitudinal stiffness of the tire 2. The tire 2 having high longitudinal stiffness exhibits excellent traction performance and braking performance. The cord 34 extends in the circumferential direction, and, thus, the reinforcing layer 14 does not exert a great influence on vertical stiffness. In the tire 2, vertical stiffness is not excessively high. The tire 2 also exhibits excellent steering stability.

In FIG. 2, an arrow Wr represents a width of the reinforcing layer 14. The width Wr represents a linear distance between the inner end Pi and the outer end Po. From the viewpoint of traction performance and braking performance, the width Wr is preferably not less than 10 mm, more preferably not less than 13 mm, and particularly preferably not less than 15 mm. From the viewpoint that the tire 2 having excellent uniformity and thus exhibiting excellent steering stability can be obtained, the width Wr is preferably not greater than 25 mm, more preferably not greater than 22 mm, and particularly preferably not greater than 20 mm.

In FIG. 2, an arrow Hi represents a height from the base line BL to the inner end Pi. The height Hi is measured along the radial direction. The height Hi is preferably not less than 20 mm. The longitudinal stiffness is sufficiently high near the core 18 regardless of whether or not the reinforcing layer 14 is disposed. Furthermore, since the rotation radius is small near the core 18, even if the reinforcing layer 14 is disposed near the core 18, the effect is low. In the tire 2 in which the height Hi is not less than 20 mm, the reinforcing layer 14 is sufficiently distant from the core 18 (or rim). In the tire 2, the reinforcing layer 14 can be effectively disposed while the width Wr is reduced. From this viewpoint, the height Hi is more preferably not less than 23 mm and particularly preferably not less than 25 mm.

In FIG. 2, an arrow Ho represents a height from the base line BL to the outer end Po. The height Ho is measured along the radial direction. The height Ho is preferably not greater than 50 mm. The tire 2 is thin near an outer end 42 (see FIG. 1) of the sidewall 6. In the tire 2 in which another layer is disposed near the outer end 42, vertical stiffness is excessively high. In the tire 2 in which the height Ho is not greater than 50 mm, the reinforcing layer 14 is sufficiently distant from the outer end 42 of the sidewall 6. The reinforcing layer 14 does not reduce steering stability. From this viewpoint, the height Ho is more preferably not greater than 47 mm and particularly preferably not greater than 45 mm.

In FIG. 2, an arrow Ha represents a height from the base line BL to the outer end Pa of the apex 20. The height Ha is measured along the radial direction. The height Ha is greater than the height Hi. In other words, the position of the inner end Pi of the reinforcing layer 14 does not coincide with the position of the outer end Pa of the apex 20 in the radial direction. The inner end Pi is a point at which the stiffness is greatly changed, and the outer end Pa is also a point at which the stiffness is greatly changed. The tire 2 in which both the positions do not coincide with each other exhibits excellent steering stability.

A ratio ((Ha-Hi)/Ht) of a difference (Ha-Hi) between the height Ha and the height Hi, to the height Ht of the tire 2, is preferably not less than 0.05 and preferably not greater than 0.30. The tire 2 in which the ratio is not less than 0.05 exhibits excellent steering stability. From this viewpoint, the ratio is more preferably not less than 0.08 and particularly preferably not less than 0.10. The tire 2 in which the ratio is not greater than 0.30 has excellent uniformity. From this viewpoint, the ratio is more preferably not greater than 0.25 and particularly preferably not greater than 0.22.

As shown in FIG. 2, the height Ho is greater than the height Ha. In other words, the position of the outer end Po of the reinforcing layer 14 does not coincide with the position of the outer end Pa of the apex 20 in the radial direction. The outer end Po is a point at which the stiffness is greatly changed, and the outer end Pa is also a point at which the stiffness is greatly changed. The tire 2 in which both the positions do not coincide with each other exhibits excellent steering stability.

A ratio ((Ho-Ha)/Ht) of a difference (Ho-Ha) between the height Ho and the height Ha, to the height Ht of the tire 2, is preferably not less than 0.05 and preferably not greater than 0.30. The tire 2 in which the ratio is not less than 0.05 and not greater than 0.30 exhibits excellent steering stability. From this viewpoint, the ratio is more preferably not less than 0.08 and particularly preferably not less than 0.10. The ratio is more preferably not greater than 0.25 and particularly preferably not greater than 0.22.

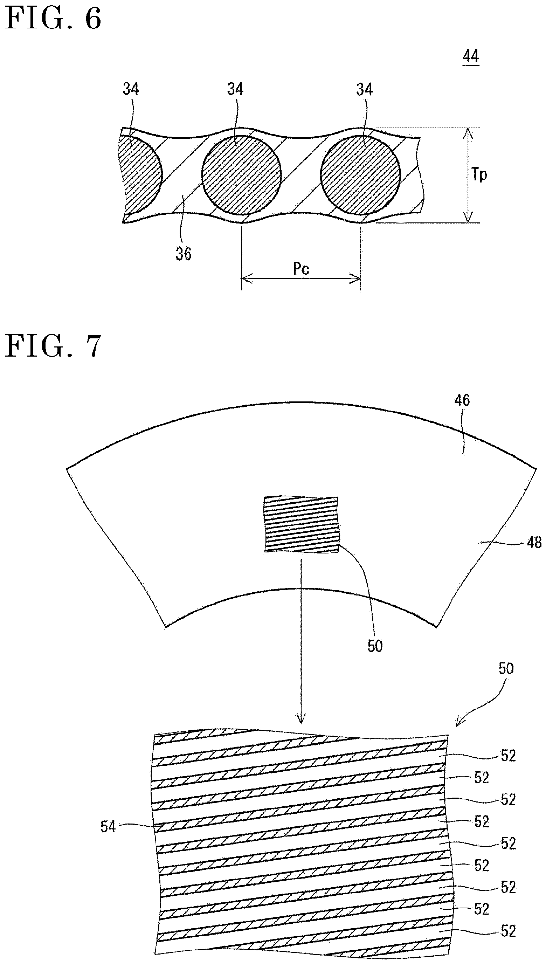

FIG. 6 is a cross-sectional view of a rubber sheet 44 for the reinforcing layer 14 of the tire 2 shown in FIG. 1. The rubber sheet 44 includes the plurality of cords 34 aligned with each other, and the topping rubber 36. Each cord 34 is covered with the topping rubber 36 in general. The cord 34 is distant from an adjacent cord 34. The topping rubber 36 is disposed between the cord 34 and the adjacent cord 34. The cross-section shown in FIG. 6 is orthogonal to the extending direction of the cord 34.

In FIG. 6, an arrow Tp represents a thickness of the rubber sheet 44, and an arrow Pc represents a pitch for the cord 34. The thickness Tp is preferably not less than 0.5 mm and preferably not greater than 2.0 mm. The pitch Pc is preferably not less than 0.8 mm and preferably not greater than 2.0 mm.

When the tire 2 is produced, the rubber sheet 44 shown in FIG. 6 is wound on a drum of a forming device. The orientation of the cords 34 included in the wound rubber sheet 44 coincides with the circumferential direction of the drum. The rubber sheet 44 and a plurality of other rubber components are assembled to obtain a raw cover (unvulcanized tire). The raw cover is put into a mold. The raw cover is pressurized in the mold. By the pressurization, the raw cover is deformed. The deformation is called shaping. The raw cover is further pressurized in the mold, and heated. By the pressurization and heating, a rubber composition of the raw cover flows. A crosslinking reaction occurs in the rubber due to the heating, to obtain the tire 2. The reinforcing layer 14 is formed from the rubber sheet 44.

The cord 34 of the reinforcing layer 14 is preferably a strand of an organic fiber. The cord 34 is extended by the shaping. From the viewpoint of achieving a sufficient extension, preferable examples of the organic fiber include polyester fibers, nylon fibers, and rayon fibers. The cord 34 obtained by twisting two or three yarns is preferable. The fineness of each yarn is preferably not less than 500 dtex and preferably not greater than 1000 dtex.

In the present invention, a dimension and an angle of each component of the tire 2 are measured in a state where the tire 2 is mounted on a normal rim and inflated with air to a normal internal pressure. In the measurement, no load is applied to the tire 2. In the description herein, the normal rim represents a rim defined by a standard on which the tire 2 is based. The "standard rim" in the JATMA standard, the "Design Rim" in the TRA standard, and the "Measuring Rim" in the ETRTO standard are the normal rims. In the description herein, the normal internal pressure represents an internal pressure defined by a standard on which the tire 2 is based. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are the normal internal pressures.

FIG. 7 is a partially cutaway cross-sectional view of a pneumatic tire 46, for a racing kart, according to another embodiment of the present invention. In FIG. 7, by the tire 46 being cut, a reinforcing layer 50 exposed from a sidewall 48 is shown. The reinforcing layer 50 includes a plurality of cords 52 and topping rubber 54. Each cord 52 is inclined relative to the circumferential direction. The specifications of the tire 46 other than the inclination angle of the cord 52 of the reinforcing layer 50 are the same as those of the tire 2 shown in FIGS. 1 to 6.

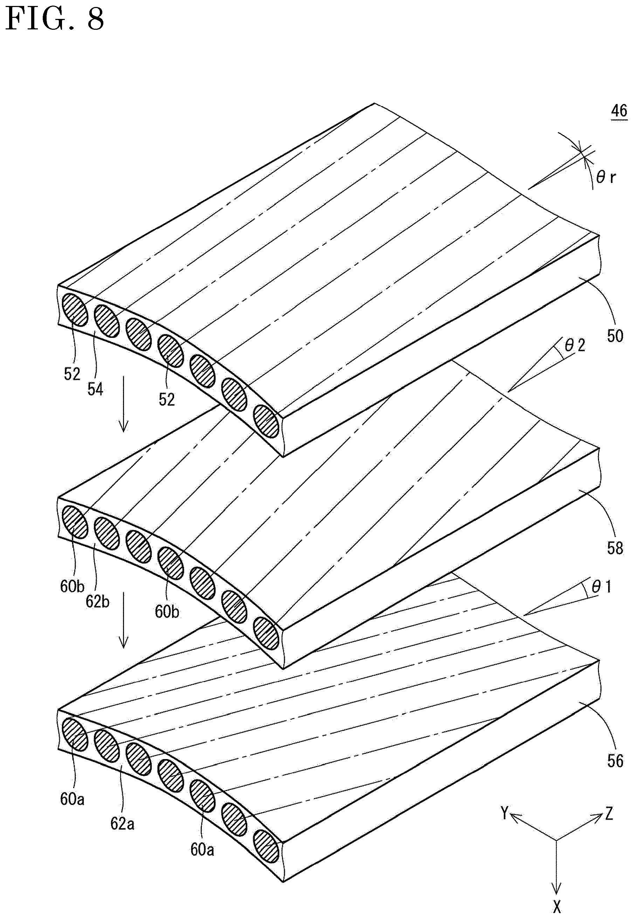

FIG. 8 is an exploded perspective view of the tire 46 shown in FIG. 7. The tire 46 has a carcass similarly to the tire 2 shown in FIG. 1. The carcass has a first ply and a second ply. FIG. 8 shows a first main portion 56 of the first ply and a second main portion 58 of the second ply. FIG. 8 further shows the reinforcing layer 50. In FIG. 8, an arrow X represents the axial direction of the tire 46, an arrow Y represents the radial direction of the tire 46, and an arrow Z represents the circumferential direction of the tire 46.

The first main portion 56 includes a plurality of cords 60a and topping rubber 62a. Each cord 60a is inclined relative to the circumferential direction. In the present embodiment, the cord 60a of the first main portion 56 is inclined relative to the circumferential direction in a negative direction. In FIG. 8, reference character θ1 represents an angle of the direction of the cord 60a relative to the circumferential direction. The angle θ1 is measured on the imaginary plane VS (see FIG. 2).

The second main portion 58 includes a plurality of cords 60b and topping rubber 62b, as described above. Each cord 60b is inclined relative to the circumferential direction. In the present embodiment, the cord 60b of the second main portion 58 is inclined relative to the circumferential direction in a positive direction. In FIG. 8, reference character θ2 represents an angle of the direction of the cord 60b relative to the circumferential direction. The angle θ2 is measured on the imaginary plane VS (see FIG. 2). In the present embodiment, the absolute value of the angle θ2 is equal to the absolute value of the angle θ1.

The reinforcing layer 50 includes the plurality of cords 52 and the topping rubber 54, as described above. Each cord 52 is inclined relative to the circumferential direction. In the present embodiment, the cord 52 of the reinforcing layer 50 is inclined relative to the circumferential direction in the positive direction. In FIG. 8, reference character θr represents an angle of the direction of the cord 52 relative to the circumferential direction. The angle θr is measured on the imaginary plane VS (see FIG. 2). As is apparent from FIGS. 7 and 8, the absolute value of the angle θr is less than the absolute value of the angle θ1, and is less than the absolute value of the angle θ2.

In the present embodiment, since the direction in which the cord 60a of the first main portion 56 is inclined is defined as being "negative", the direction in which the cord 60b of the second main portion 58 is inclined is "positive", and the direction in which the cord 52 of the reinforcing layer 50 is inclined is "positive". When the direction in which the cord 60a of the first main portion 56 is inclined is defined as being "positive", the direction in which the cord 60b of the second main portion 58 is inclined is "negative", and the direction in which the cord 52 of the reinforcing layer 50 is inclined is "negative".

When a racing kart is accelerated or decelerated, a shearing stress in the rotation direction occurs in the tire 46. The absolute value of the angle θr of the cord 52 of the reinforcing layer 50 is small. Therefore, a tensile force of the cord 52 reduces shear deformation of the tire 46. In the tire 46, the reinforcing layer 50 contributes to longitudinal stiffness of the tire 46. The tire 46 having high longitudinal stiffness exhibits excellent traction performance and braking performance. The absolute value of the angle θr is small, and, thus, the reinforcing layer 50 does not exert a great influence on vertical stiffness. In the tire 46, vertical stiffness is not excessively high. The tire 46 also exhibits excellent steering stability.

From the viewpoint of traction performance, braking performance, and steering stability, the absolute value of the angle θr is preferably not greater than 15° (degrees), more preferably not greater than 12°, and particularly preferably not greater than 10°. From the viewpoint of traction performance, braking performance, and steering stability, the absolute value of the angle θr is ideally zero. From the viewpoint that shaping in the mold is less likely to adversely affect uniformity, the absolute value of the angle θr is preferably not less than 2°, more preferably not less than 4°, and particularly preferably not less than 5°.

The absolute value of a difference (01-0r) between the angle θ1 and the angle θr represents an angle of the cord 52 of the reinforcing layer 50 relative to the cord 60a of the first ply. The absolute value of a difference (02-0r) between the angle θ2 and the angle θr represents an angle of the cord 52 of the reinforcing layer 50 relative to the cord 60b of the second ply. As described above, the direction in which the cord 60a of the first main portion 56 is inclined is "negative", the direction in which the cord 60b of the second main portion 58 is inclined is "positive", and the direction in which the cord 52 of the reinforcing layer 50 is inclined is "positive". Therefore, the absolute value of the difference (02-0r) is less than the absolute value of the difference (θ1-θr). The absolute value of the difference (θ2-θr) is preferably not less than 10° and preferably not greater than 40°. In the tire 46, the carcass and the reinforcing layer 50 can contribute to traction performance, braking performance, and steering stability. From this viewpoint, the absolute value of the difference (02-0r) is more preferably not less than 15° and particularly preferably not less than 20°.

The direction in which the cord 60a of the first main portion 56 is inclined may be "positive", the direction in which the cord 60b of the second main portion 58 is inclined may be "negative", and the direction in which the cord 52 of the reinforcing layer 50 is inclined may be "positive". In this case, the absolute value of the difference (01-0r) is less than the absolute value of the difference (02-0r). The absolute value of the difference (01-0r) is preferably not less than 10° and preferably not greater than 40°. In the tire 46, the carcass and the reinforcing layer 50 can contribute to traction performance, braking performance, and steering stability. From this viewpoint, the absolute value of the difference (01-0r) is more preferably not less than 15° and particularly preferably not less than 20°.

### Examples

The following will show the effect of the present invention by means of examples, but the present invention should not be construed in a limited manner based on the description of these examples.

### [Example 1]

Front tires, for a racing kart, shown in FIGS. 1 to 6 were produced. The size of the tire was "10×4.50-5". The tire had the following specifications.
Height Ht of the tire: 60 mm
Height Ha of the outer end Pa of the apex: 38 mm
Angle θ1 of the cord of the first ply: -35°
Angle θ2 of the cord of the second ply: 35°
Angle θr of the cord of the reinforcing layer: 0°
Width Wr of the reinforcing layer: 20 mm
Height Hi of the inner end Pi of the reinforcing layer: 30 mm
Height Ho of the outer end Po of the reinforcing layer: 45 mm

### [Examples 2 to 4]

Tires of examples 2 to 4 were each obtained in the same manner as in example 1 except that the height Hi of the inner end Pi and the height Ho of the outer end Po in the reinforcing layer were as indicated below in Table 1.

### [Examples 5 to 7 and Comparative example 1]

Tires of examples 5 to 7 and comparative example 1 were each obtained in the same manner as in example 1 except that the width Wr of the reinforcing layer was as indicated below in Table 2.

### [Examples 8 to 10 and Comparative example 2]

Tires of examples 8 to 10 and comparative example 2 were each obtained in the same manner as in example 1 except that the angle θr of the cord of the reinforcing layer was as indicated below in Table 3.

### [Examples 11 and 12]

Tires of examples 11 and 12 were each obtained in the same manner as in example 1 except that the angle θ1 of the cord of the first ply and the angle θ2 of the cord of the second ply were as indicated below in Table 4.

### [Comparative example 3]

A tire of comparative example 3 was obtained in the same manner as in example 1 except that no reinforcing layer was provided.

### [Sensory evaluation]

Each tire was mounted on a rim having a size of 435, and was inflated with air to an internal pressure of 70 kPa. The tires were mounted to a racing kart having an engine displacement of 250 cc. A driver was caused to drive the racing kart on a racing circuit, and evaluate traction performance and braking performance. Furthermore, the driver was caused to evaluate steering stability. The results are indicated below as indexes in Tables 1 to 4. The greater the value is, the better the evaluation is.

### [Overall evaluation]

An average of the index of the traction/braking performance and the index of the steering stability was calculated. The results are indicated below in Tables 1 to 4. The greater the value is, the better the evaluation is.

### [Table 1]

**Table 1 Evaluation results**

| | Example 2 | Example 3 | Example 1 | Example 4 |
|---|---|---|---|---|
| θ1 (degree) | -35 | -35 | -35 | -35 |
| θ2 (degree) | 35 | 35 | 35 | 35 |
| θr (degree) | 0 | 0 | 0 | 0 |
| θ2-θr | 35 | 35 | 35 | 35 |
| Wr (mm) | 20 | 20 | 20 | 20 |
| Hi (mm) | 20 | 25 | 30 | 35 |
| Ho (mm) | 35 | 40 | 45 | 50 |
| Ha-Hi | 18 | 13 | 8 | 3 |
| Ho-Ha | -3 | 2 | 7 | 12 |
| Traction performance Braking performance | 3.3 | 3.4 | 3.5 | 3.5 |
| Steering stability | 2.8 | 2.9 | 3.0 | 2.9 |
| Overall evaluation | 3.05 | 3.15 | 3.25 | 3.20 |

### [Table 2]

**Table 2 Evaluation results**

| | Example 5 | Example 6 | Example 7 | Comparative example 1 |
|---|---|---|---|---|
| θ1 (degree) | -35 | -35 | -35 | -35 |
| θ2 (degree) | 35 | 35 | 35 | 35 |
| θr (degree) | 0 | 0 | 0 | 0 |
| θ2-θr | 35 | 35 | 35 | 35 |
| Wr (mm) | 10 | 15 | 25 | 30 |
| Hi (mm) | 34 | 32 | 28 | 26 |
| Ho (mm) | 42 | 43 | 47 | 49 |
| Ha-Hi | 4 | 6 | 10 | 12 |
| Ho-Ha | 4 | 5 | 9 | 11 |
| Traction performance Braking performance | 3.2 | 3.4 | 3.5 | 3.5 |
| Steering stability | 3.0 | 3.0 | 2.7 | 2.5 |
| Overall evaluation | 3.10 | 3.20 | 3.10 | 3.00 |

### [Table 3]

**Table 3 Evaluation results**

| | Example 8 | Example 9 | Example 10 | Comparative example 2 |
|---|---|---|---|---|
| θ1 (degree) | -35 | -35 | -35 | -35 |
| θ2 (degree) | 35 | 35 | 35 | 35 |
| θr (degree) | 5 | 10 | 15 | 20 |
| θ2-θr | 30 | 25 | 20 | 15 |
| Wr (mm) | 20 | 20 | 20 | 20 |
| Hi (mm) | 30 | 30 | 30 | 30 |
| Ho (mm) | 45 | 45 | 45 | 45 |
| Ha-Hi | 8 | 8 | 8 | 8 |
| Ho-Ha | 7 | 7 | 7 | 7 |
| Traction performance Braking performance | 3.4 | 3.4 | 3.3 | 3.1 |
| Steering stability | 3.0 | 2.9 | 2.8 | 2.6 |
| Overall evaluation | 3.20 | 3.15 | 3.05 | 2.85 |

### [Table 4]

**Table 4 Evaluation results**

| | Example 11 | Example 12 | Comparative example 3 |
|---|---|---|---|
| θ1 (degree) | -25 | -40 | -35 |
| θ2 (degree) | 25 | 40 | 35 |
| θr (degree) | 15 | 0 | - |
| θ2-θr | 10 | 40 | - |
| Wr (mm) | 20 | 20 | - |
| Hi (mm) | 30 | 30 | - |
| Ho (mm) | 45 | 45 | - |
| Ha-Hi | 8 | 8 | - |
| Ho-Ha | 7 | 7 | - |
| Traction performance Braking performance | 3.2 | 3.2 | 3.0 |
| Steering stability | 3.0 | 2.9 | 3.0 |
| Overall evaluation | 3.10 | 3.05 | 3.00 |

As indicated in Tables 1 to 4, the tire of each example exhibited traction performance, braking performance, and steering stability in an excellently balanced manner. The evaluation results clearly indicate that the present invention is superior.

The pneumatic tire of the present invention can be mounted to either a front rim or a rear rim of a racing kart. The pneumatic tire according to the present invention can be mounted to various grades of racing karts.

## Claims

1. A pneumatic tire (2, 46) for a racing kart, the pneumatic tire (2, 46) comprising:
a tread (4);
a pair of sidewalls (6, 48);
a pair of beads (8);
a carcass (10); and
a pair of reinforcing layers (14, 50), wherein
the sidewalls (6) extend almost inwardly from ends, respectively, of the tread (4) in a radial direction,
the beads (8) are disposed inward of the sidewalls (6), respectively, in an axial direction,
the carcass (10) extends along inner sides of the tread (4) and the sidewalls (6), is extended on and between one of the beads (8) and another of the beads (8), and has a bias structure,
the reinforcing layers (14, 50) are disposed inward of the sidewalls (6), respectively, in the axial direction,
a width (Wr) of each reinforcing layer (14, 50) is not greater than 25 mm, wherein the width (Wr) represents a linear distance between an inner end (Pi) of each reinforcing layer (14) in the radial direction and an outer end (Po) of each reinforcing layer (14) in the radial direction,
each reinforcing layer (14, 50) includes a plurality of cords (34, 52), and
an absolute value of an angle of each cord (34, 52) relative to a circumferential direction is not less than 0° and not greater than 15°,
**characterized in that**
a height Hi of the inner end (Pi) of each reinforcing layer (14, 50) measured in the radial direction is not less than 20 mm.

2. The tire (2, 46) according to claim 1, wherein a height Ho of the outer end (Po) of each reinforcing layer (14, 50) measured in the radial direction is not greater than 50 mm.

3. The tire (2, 46) according to claim 1 or 2, wherein
each bead (8) includes a core (18), and an apex (20) extending outwardly from the core (18) in the radial direction,
the height Hi of the inner end (Pi) of each reinforcing layer (14, 50) is less than a height Ha of an outer end (Pa) of the apex (20) measured in the radial direction, and
the height Ho of the outer end (Po) of each reinforcing layer (14, 50) is greater than the height Ha of the outer end (Pa) of the apex (20).

4. The tire (2, 46) according to claim 3, wherein a ratio ((Ha-Hi)/Ht) of a difference (Ha-Hi) between the height Ha and the height Hi, to a height Ht of the tire (2, 46) measured in the radial direction, is not less than 0.05 and not greater than 0.30.

5. The tire (2, 46) according to claim 3 or 4, wherein a ratio ((Ho-Ha)/Ht) of a difference (Ho-Ha) between the height Ho and the height Ha, to the height Ht of the tire (2, 46), is not less than 0.05 and not greater than 0.30.

6. The tire (2, 46) according to any one of claims 1 to 5, wherein
the carcass (10) includes a first ply (22) and a second ply (24),
the first ply (22) includes a plurality of cords (38a, 60a) and topping (40a, 62a), and each cord (38a, 60a) of the first ply (22) is inclined relative to the circumferential direction in a negative direction,
the second ply (24) includes a plurality of cords (38b, 60b) and topping (40b, 62b), and each cord (38b, 60b) of the second ply (24) is inclined relative to the circumferential direction in a positive direction,
an angle of each of the cords (34, 52) of the reinforcing layers (14, 50) relative to the circumferential direction indicates zero or a positive value, and
an absolute value of an angle of each of the cords (34, 52) of the reinforcing layers (14, 50) relative to each cord (38b, 60b) of the second ply (24) is not less than 10° and not greater than 40°.

7. The tire (2, 46) according to any one of claims 1 to 5, wherein
the carcass (10) includes a first ply (22) and a second ply (24),
the first ply (22) includes a plurality of cords (38a, 60a) and topping (40a, 62a), and each cord (38a, 60a) of the first ply (22) is inclined relative to the circumferential direction in a positive direction,
the second ply (24) includes a plurality of cords (38b, 60b) and topping (40b, 62b), and each cord (38b, 60b) of the second ply (24) is inclined relative to the circumferential direction in a negative direction,
an angle of each of the cords (34, 52) of the reinforcing layers (14, 50) relative to the circumferential direction indicates zero or a positive value, and
an absolute value of an angle of each of the cords (34, 52) of the reinforcing layers (14, 50) relative to each cord (38a, 60a) of the first ply (22) is not less than 10° and not greater than 40°.

## Patentansprüche

1. Luftreifen (2, 46) für einen Renn-Kart, wobei der Luftreifen (2, 46) umfasst:
eine Lauffläche (4);
ein Paar von Seitenwänden (6, 48);
ein Paar von Wülsten (8);
eine Karkasse (10); und
ein Paar von Verstärkungslagen (14, 50), wobei
sich die Seitenwände (6) jeweils von Enden der Lauffläche (4) in einer radialen Richtung nahezu einwärts erstrecken,
die Wülste (8) jeweils in einer axialen Richtung innerhalb der Seitenwände (6) angeordnet sind,
sich die Karkasse (10) entlang von Innenseiten der Lauffläche (4) und der Seitenwände (6) erstreckt, an und zwischen einer der Wülste (8) und einer anderen der Wülste (8) ausgedehnt ist und eine Schrägstruktur aufweist,
die Verstärkungslagen (14, 50) jeweils in der axialen Richtung innerhalb der Seitenwände (6) angeordnet sind,
eine Breite (Wr) jeder Verstärkungslage (14, 50) nicht größer als 25 mm ist, wobei die Breite (Wr) eine lineare Distanz zwischen einem inneren Ende (Pi) jeder Verstärkungslage (14) in der radialen Richtung und einem äußeren Ende (Po) jeder Verstärkungslage (14) in der radialen Richtung darstellt,
jede Verstärkungslage (14, 50) mehrere Korde (34, 52) aufweist und
ein Absolutwert eines Winkels jedes Kords (34, 52) relativ zu einer Umfangsrichtung nicht kleiner als 0° und nicht größer als 15° ist,
**dadurch gekennzeichnet, dass**
eine Höhe Hi des inneren Endes (Pi) jeder Verstärkungslage (14, 50) gemessen in der radialen Richtung nicht kleiner als 20 mm ist.

2. Reifen (2, 46) nach Anspruch 1, wobei eine Höhe Ho des äußeren Endes (Po) jeder Verstärkungslage (14, 50) gemessen in der radialen Richtung nicht größer als 50 mm ist.

3. Reifen (2, 46) nach Anspruch 1 oder 2, wobei
jede Wulst (8) einen Kern (18) und eine Spitze (20) aufweist, die sich in der radialen Richtung von dem Kern (18) nach außen erstreckt,
die Höhe Hi des inneren Endes (Pi) jeder Verstärkungslage (14, 50) kleiner als eine Höhe Ha eines äußeren Endes (Pa) der Spitze (20) gemessen in der radialen Richtung ist und
die Höhe Ho des äußeren Endes (Po) jeder Verstärkungslage (14, 50) größer als die Höhe Ha des äußeren Endes (Pa) der Spitze (20) ist.

4. Reifen (2, 46) nach Anspruch 3, wobei ein Verhältnis ((Ha - Hi)/Ht) einer Differenz (Ha - Hi) zwischen der Höhe Ha und der Höhe Hi zu einer Höhe Ht des Reifens (2, 46) gemessen in der radialen Richtung nicht kleiner als 0,05 und nicht größer als 0,30 ist.

5. Reifen (2, 46) nach Anspruch 3 oder 4, wobei ein Verhältnis ((Ho - Ha)/Ht) einer Differenz (Ho - Ha) zwischen der Höhe Ho und der Höhe Ha zu der Höhe Ht des Reifens (2, 46) nicht kleiner als 0,05 und nicht größer als 0,30 ist.

6. Reifen (2, 46) nach einem der Ansprüche 1 bis 5, wobei
die Karkasse (10) eine erste Schicht (22) und eine zweite Schicht (24) aufweist,
die erste Schicht (22) mehrere Korde (38a, 60a) und eine Beschichtung (40a, 62a) aufweist und jeder Kord (38a, 60a) der ersten Schicht (22) relativ zu der Umfangsrichtung in einer negativen Richtung geneigt ist,
die zweite Schicht (24) mehrere Korde (38b, 60b) und eine Beschichtung (40b, 62b) aufweist und jeder Kord (38b, 60b) der zweiten Schicht (24) relativ zu der Umfangsrichtung in einer positiven Richtung geneigt ist,
ein Winkel jedes der Korde (34, 52) der Verstärkungslagen (14, 50) relativ zu der Umfangsrichtung Null oder einen positiven Wert annimmt und
ein Absolutwert eines Winkels jedes der Korde (34, 52) der Verstärkungslagen (14, 50) relativ zu jedem Kord (38b, 60b) der zweiten Schicht (24) nicht kleiner als 10° und nicht größer als 40° ist.

7. Reifen (2, 46) nach einem der Ansprüche 1 bis 5, wobei
die Karkasse (10) eine erste Schicht (22) und eine zweite Schicht (24) aufweist,
die erste Schicht (22) mehrere Korde (38a, 60a) und eine Beschichtung (40a, 62a) aufweist und jeder Kord (38a, 60a) der ersten Schicht (22) relativ zu der Umfangsrichtung in einer positiven Richtung geneigt ist,
die zweite Schicht (24) mehrere Korde (38b, 60b) und eine Beschichtung (40b, 62b) aufweist und jeder Kord (38b, 60b) der zweiten Schicht (24) relativ zu der Umfangsrichtung in einer negativen Richtung geneigt ist,
ein Winkel jedes der Korde (34, 52) der Verstärkungslagen (14, 50) relativ zu der Umfangsrichtung Null oder einen positiven Wert annimmt und
ein Absolutwert eines Winkels jedes der Korde (34, 52) der Verstärkungslagen (14, 50) relativ zu jedem Kord (38a, 60a) der ersten Schicht (22) nicht kleiner als 10° und nicht größer als 40° ist.

## Revendications

1. Bandage pneumatique (2, 46) pour un kart de course, le bandage pneumatique (2, 46) comprenant :
une bande de roulement (4) ;
une paire de parois latérales (6, 48) ;
une paire de talons (8) ;
une carcasse (10) ; et
une paire de couches de renforcement (14, 50), dans lequel les parois latérales (6) s'étendent presque vers l'intérieur par rapport à des extrémités, respectivement, de la bande de roulement (4) dans une direction radiale,
les talons (8) sont disposés à l'intérieur des parois latérales (6), respectivement, dans une direction axiale,
la carcasse (10) s'étend le long de côtés intérieurs de la bande de roulement (4) et des parois latérales (6), est en extension sur et entre un des talons (8) et un autre des talons (8), et a une structure de biais,
les couches de renforcement (14, 50) sont disposées à l'intérieur des parois latérales (6), respectivement, dans la direction axiale,
une largeur (Wr) de chaque couche de renforcement (14, 50) n'est pas supérieure à 25 mm, la largeur (Wr) représentant une distance linéaire entre une extrémité intérieure (Pi) de chaque couche de renforcement (14 (dans la direction radiale) et une extrémité extérieure (Po) de chaque couche de renforcement (14) dans la direction radiale,
chaque couche de renforcement (14, 50) inclut une pluralité de câblés (34, 52), et
une valeur absolue d'un angle de chaque câblé (34, 52) relativement à une direction circonférentielle n'est pas inférieure à 0° et n'est pas supérieure à 15°,
**caractérisé en ce que**
une hauteur Hi de l'extrémité intérieure (Pi) de chaque couche de renforcement (14, 50) mesurée dans la direction radiale n'est pas inférieure à 20 mm.

2. Pneumatique (2, 46) selon la revendication 1, dans lequel une hauteur Ho de l'extrémité extérieure (Po) de chaque couche de renforcement (14, 50) mesurée dans la direction radiale n'est pas supérieure à 50 mm.

3. Pneumatique (2, 46) selon la revendication 1 ou 2, dans lequel
chaque talon (8) inclut une âme (18) et un sommet (20) s'étendant vers l'extérieur depuis l'âme (18) dans la direction radiale,
la hauteur Hi de l'extrémité intérieure (Pi) de chaque couche de renforcement (14, 50) est inférieure à une hauteur Ha d'une extrémité extérieure (Pa) du sommet (20) mesurée dans la direction radiale, et
la hauteur Ho de l'extrémité extérieure (Po) de chaque couche de renforcement (14, 50) est supérieure à la hauteur Ha de l'extrémité extérieure (Pa) du sommet (20).

4. Pneumatique (2, 46) selon la revendication 3, dans lequel un rapport ((Ha-Hi)/Ht) d'une différence (Ha-Hi) entre la hauteur Ha et la hauteur Hi sur une hauteur Ht du pneumatique (2, 46) mesurée dans la direction radiale n'est pas inférieur à 0,05 et n'est pas supérieur à 0,30.

5. Pneumatique (2, 46) selon la revendication 3 ou 4, dans lequel un rapport ((Ho-Ha)/Ht) d'une différence (Ho-Ha) entre la hauteur Ho et la hauteur Ha sur une hauteur Ht du pneumatique (2, 46) n'est pas inférieur à 0,05 et n'est pas supérieur à 0,30.

6. Pneumatique (2, 46) selon l'une quelconque des revendications 1 à 5, dans lequel
la carcasse (10) inclut une première nappe (22) et une seconde nappe (24),
la première nappe (22) inclut une pluralité de câblés (38a, 60a) et un enrobage (40a, 62a), et chaque câblé (38a, 60a) de la première nappe (22) est incliné relativement à la direction circonférentielle dans une direction négative,
la seconde nappe (24) inclut une pluralité de câblés (38b, 60b) et un enrobage (40b, 62b), et chaque câblé (38b, 60b) de la seconde nappe (24) est incliné relativement à la direction circonférentielle dans une direction positive,
un angle de chacun des câblés (34, 52) des couches de renforcement (14, 50) relativement à la direction circonférentielle indique zéro ou une valeur positive, et
une valeur absolue d'un angle de chacun des câblés (34, 52) des couches de renforcement (14, 50) relativement à chaque câblé (38b, 60b) de la seconde nappe (24) n'est pas inférieure à 10° et n'est pas supérieure à 40°.

7. Pneumatique (2, 46) selon l'une quelconque des revendications 1 à 5, dans lequel
la carcasse (10) inclut une première nappe (22) et une seconde nappe (24),
la première nappe (22) inclut une pluralité de câblés (38a, 60a) et un enrobage (40a, 62a), et chaque câblé (38a, 60a) de la première nappe (22) est incliné relativement à la direction circonférentielle dans une direction positive,
la seconde nappe (24) inclut une pluralité de câblés (38b, 60b) et un enrobage (40b, 62b), et chaque câblé (38b, 60b) de la seconde nappe (24) est incliné relativement à la direction circonférentielle dans une direction négative,
un angle de chacun des câblés (34, 52) des couches de renforcement (14, 50) relativement à la direction circonférentielle indique zéro ou une valeur positive, et
une valeur absolue d'un angle de chacun des câblés (34, 52) des couches de renforcement (14, 50) relativement à chaque câblé (38a, 60a) de la première nappe (22) n'est pas inférieure à 10° et n'est pas supérieure à 40°.
